# EUROPÄISCHE PATENTSCHRIFT

(11) **EP 2 820 260 B1**
(45) Veröffentlichungstag und Bekanntmachung des Hinweises auf die Patenterteilung: **25.10.2017**
(21) Anmeldenummer: 13706560.3
(22) Anmeldetag: 28.02.2013
(51) Int. Cl.: B01D 46/24, F01N 3/20, F01N 3/28

(54) **VORRICHTUNG ZUR ABGASREINIGUNG**
DEVICE FOR EXHAUST GAS PURIFICATION
DISPOSITIF D'ÉPURATION DE GAZ D'ÉCHAPPEMENT

(30) Priorität: 02.03.2012 DE 102012004291; 12.09.2012 DE 102012017976
(43) Veröffentlichungstag der Anmeldung: 07.01.2015
(73) Patentinhaber: Continental Automotive GmbH, 30165 Hannover (DE)
(72) Erfinder: MÜLLER-HAAS, Klaus, 51103 Köln (DE); BRÜCK, Rolf, 51429 Bergisch Gladbach (DE)
(86) Internationale Anmeldenummer: PCT/EP2013/054094
(87) Internationale Veröffentlichungsnummer: WO 2013/127955

(56) Entgegenhaltungen:
- DE-A1-102005 063 081
- US-A1- 2009 019 843
- US-A1- 2009 084 094
- US-A1- 2011 131 958
- US-A1- 2011 283 685

## Beschreibung

Die Erfindung betrifft eine Vorrichtung zur Abgasreinigung. Diese Vorrichtung ist ein Abgasreinigungsmodul, welches in eine Abgasbehandlungsvorrichtung zur Reinigung der Abgase einer Verbrennungskraftmaschine integriert werden kann. Dieses Abgasreinigungsmodul umfasst eine Zugabevorrichtung für ein flüssiges Additiv in die Abgasströmung.

Insbesondere im Kraftfahrzeugbereich finden zur Reinigung der Abgase von Verbrennungskraftmaschinen häufig Abgasbehandlungsverfahren Anwendung, bei welchem dem Abgas flüssiges Additiv zugeführt wird. Ein besonders häufig eingesetztes Abgasbehandlungsverfahren ist das Verfahren der selektiven katalytischen Reduktion (SCR), bei welchem Stickstoffoxidverbindungen im Abgas unter Zuhilfenahme eines Reduktionsmittels reduziert werden. Als Reduktionsmittel wird oft Ammoniak verwendet. Ammoniak wird in Kraftfahrzeugen normalerweise nicht selbst bevorratet, sondern in Form einer Reduktionsmittelvorläuferlösung, welche zu Ammoniak umgesetzt werden kann. Die Umsetzung kann entweder innerhalb des Abgassystems unter Anwesenheit des Abgases und/oder außerhalb des Abgassystems in einem eigens dafür vorgesehenen Reaktor durchgeführt werden.

Die Reduktionsmittelvorläuferlösung wird in einem Tank gelagert und kann mit einer Fördereinheit der Abgasbehandlungsvorrichtung zugeführt werden. Eine besonders häufig eingesetzte Reduktionsmittelvorläuferlösung ist flüssige Harnstoff Wasser-Lösung, welche beispielsweise mit einem Harnstoffgehalt von 32,5 % unter dem Handelsnamen AdBlue® erhältlich ist. Sowohl das Reduktionsmittel als auch der Reduktionsmittelvorläufer können demnach ein Additiv sein.

Zur Zugabe des flüssigen Additivs in die Abgasströmung kann eine Art Injektor oder eine Art Düse verwendet werden. Bei der Zugabe von flüssigem Additiv in eine Abgasströmung ist es ein Ziel, eine möglichst gleichmäßige Verteilung des flüssigen Additivs und dessen Zersetzungsprodukte in der Abgasströmung zu erreichen. Insbesondere für die abgasinterne Umsetzung der Reduktionsmittelvorläuferlösung ist eine gute Verteilung in der Abgasströmung vorteilhaft. Die Umsetzung findet nämlich dann vorwiegend thermisch statt (Thermolyse), wobei die Wärme der Abgasströmung zur Umsetzung genutzt wird.

Darüber hinaus sind die in einer Zugabevorrichtung häufig verwendeten Ventile oder Düsen temperaturempfindlich. Durch die Wärme der Abgasströmung kann beispielsweise ein elektrisch betriebenes Magnetventil, welches die Zugabe des flüssigen Additivs steuert, leicht beschädigt werden. Eine Abgasbehandlungsvorrichtung muss daher vorzugsweise so gestaltet werden, dass die Temperatur an der Zugabevorrichtung nicht über eine vorgegebene Grenztemperatur ansteigt.

Weiterhin sind Ablagerungen von flüssigem Additiv im Bereich der Zugabevorrichtung sehr kritisch. Insbesondere wenn als flüssiges Additiv Harnstoff-Wasser-Lösung verwendet wird, kann der Harnstoff feste kristalline Ablagerungen an der Zugabevorrichtung und/oder im Bereich der Zugabevorrichtung in der Abgasleitung bilden. Diese Ablagerungen können einerseits zu einer Verstopfung der Zugabevorrichtung führen, wodurch die Zugabe behindert wird. Darüber hinaus können derartige Ablagerungen sich gegebenenfalls schlagartig lösen und dann als feste Partikel in Strömungsrichtung hinter der Zugabevorrichtung angeordnete Abgasbehandlungskomponenten beschädigen.

Zudem sollte die Integration der Zugabevorrichtung in ein Kraftfahrzeug oder Arbeitsmaschine möglichst kostengünstig sein. Insbesondere ist es gewünscht, dass auch für Fahrzeug-Kleinserien (beispielsweise im Spezialmaschinen- und Nutzfahrzeugbereich) eine kostengünstige Integration einer Zugabevorrichtung in eine Abgasbehandlungsvorrichtung möglich ist, ggf. auch nach Art eines Nachrüstsatzes.

DE 10 2005 063 081 A1 offenbart ein Einbauteil zur Montage in einem Abgasstrang einer Verbrennungskraftmaschine. Auf einer Außenseite eines Rohrstückes ist ein Dosiermodul zum Dosierten eines Reduktionsmittel-Vorläufers vorgesehen.

Ausgehend hiervon ist es Aufgabe der hier vorliegenden Erfindung, die im Zusammenhang mit dem Stand der Technik geschilderten technischen Probleme zu lösen bzw. zumindest zu lindern. Es soll insbesondere eine besonders vorteilhafte Vorrichtung umfassend eine Zugabevorrichtung für ein flüssiges Additiv für eine Abgasbehandlungsvorrichtung angegeben werden, die insbesondere zur Durchführung des SCR-Verfahrens in der Abgasbehandlungsvorrichtung geeignet bzw. hilfreich ist.

Diese Aufgaben werden gelöst mit einer Vorrichtung gemäß den Merkmalen des Patentanspruchs 1. Weitere vorteilhafte Ausgestaltungen der Vorrichtung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft eine Vorrichtung, aufweisend einen Rohrleitungsabschnitt für eine Abgasströmung mit einem Eintrittsende, einem Austrittsende, einem Geradenabschnitt und einer Ausbuchtung mit einer Öffnung zur Montage einer Zugabevorrichtung für ein flüssiges Additiv in dem Geradenabschnitt, wobei die Ausbuchtung eine Höhe und eine Erstreckung hat und die Erstreckung mindestens doppelt so groß wie die Höhe ist, und weiter an dem Eintrittsende und an dem Austrittsende jeweils mindestens ein scheibenförmiger Wabenkörper angeordnet ist, wobei eine Zentrumsachse der Öffnung auf einen der scheibenförmigen Wabenkörper ausgerichtet ist. Die Zentrumsachse der Öffnung ist vorzugsweise mittig auf einen der scheibenförmigen Wabenkörper ausgerichtet. Mit dem Begriff "mittig" ist hier gemeint, dass die Zentrumsachse in einem Bereich von weniger als 20 Prozent einer Stirnfläche des Wabenkörpers auf den Wabenkörper trifft, wobei dieser Bereich im Zentrum der Stirnfläche etwa kreisförmig angeordnet ist.

Dabei ist bevorzugt, dass der scheibenförmige Wabenkörper an dem Austrittsende und/oder an dem Eintrittsende den Rohrleitungsabschnitt abschließt.

Die Vorrichtung ist insbesondere ein Abgasreinigungsmodul oder eine Abgasreinigungskomponente, welche in eine Abgasbehandlungsvorrichtung oder in ein Abgassystem (nachträglich) eingesetzt oder integriert werden kann. Ein Abgassystem ist die Gesamtheit aller Module und Komponenten, die an einer Verbrennungskraftmaschine zur Reinigung zur Reinigung der Abgase verwendet werden. Damit können das Eintrittsende und das Austrittsende jeweils an einen Abschnitt einer Abgasleitung angeschlossen werden. Der Rohrleitungsabschnitt weißt vorzugsweise an beiden Enden Anschlussmittel zum Anschluss von Leitungsabschnitten auf. Diese Anschlussmittel können beispielsweise Mittel zur Ausbildung einer Schweißverbindung zwischen dem Rohrleitungsabschnitt und weiteren Abschnitten einer Abgasleitung sein. Solche Anschlussmittel können beispielsweise durch einen Rand des Rohrleitungsabschnittes gebildet sein. Ein Mittel zur Ausbildung einer Schweißverbindung kann auch eine schräge Kante am Rand eines Rohrleitungsabschnittes umfassen, welche die Ausbildung einer v-förmigen Schweißnaht zur Verbindung des Rohrabschnittes an angrenzende Abschnitte einer Abgasleitung ermöglicht. Es ist auch möglich, dass die Anschlussmittel nach Art eines Flansches oder nach Art einer Steckverbindung ausgebildet sind.

Der Rohrleitungsabschnitt ist vorzugsweise - insbesondere in dem Geradenabschnitt (gerade verlaufender Abschnitt des Rohrleitungsabschnitts) - zylindrisch geformt. Der Rohrleitungsabschnitt hat vorzugsweise eine kreisförmige Querschnittsfläche mit einem Durchmesser. Die kreisförmige Querschnittsfläche bzw. die zylindrische Form definieren vorzugsweise eine Grundform. Der Rohrleitungsabschnitt kann Einbuchtungen, Ausbuchtungen, Einschnürungen oder Erweiterungen aufweisen, die von dieser Grundform abweichen.

In einem Geradenabschnitt ist zudem (genau) eine Ausbuchtung mit einer Öffnung zur Montage der Zugabevorrichtung für das flüssiges Additiv vorgesehen, wobei die Ausbuchtung eine Höhe und eine Erstreckung hat und die Erstreckung mindestens doppelt so groß wie die Höhe ist. Damit gleicht die Ausbuchtung in einer seitlichen Ansicht etwa einem spitzen Dreieck, wobei an der kurzen Kathete die Öffnung vorgesehen ist. Zur Charakterisierung der Ausbuchtung kann der Rohrleitungsabschnitt gedanklich unterteilt werden in einen zylindrischen Geradenabschnitt und eine "darauf aufgesetzte" Ausbuchtung, so dass die geometrischen Größen der Ausbuchtung mit Bezug zu diesem zylindrischen Geradenabschnitt ohne weiteres bestimmbar sind. Hierbei ist vorteilhaft, wenn das Additiv mit einem möglichst flachen Winkel und/oder einem möglichst weiten Eintrittsbereich in den zylindrischen Geradenabschnitt zugegeben wird. So wird in der Ausbuchtung auch ein Ausbreitungsvolumen für das zugegebene Additiv bereitgestellt, das noch nicht sehr stark der Abgasströmung ausgesetzt ist und damit auch weniger stark die Ausbildung eines gewünschten Sprühbildes in der Ausbuchtung beeinflusst. Daher ist hier vorgegeben, dass die Erstreckung der Ausbuchtung (parallel zur Erstreckungsrichtung des Rohrleitungsabschnitts) mindestens um den Faktor 2, insbesondere 2,5 oder sogar um den Faktor 3 größer sein soll wie die Höhe der Ausbuchtung (senkrecht zur Erstreckung). Zudem wurde herausgefunden, dass der Faktor einen Wert von 4,5 regelmäßig nicht überschreiten sollte, weil dann unter Umständen ungünstige Strömungsbedingungen in der Ausbuchtung entstehen können, die Ausbuchtung über die Erstreckung nicht mehr mit Additiv ausgefüllt werden kann und/oder die Abmessungen der Vorrichtung zu groß für eine (nachträgliche) Montage in ein Abgassystem sind.

Das Eintrittsende und das Austrittsende bilden jeweils eine (offene) Stirnseite des Rohrleitungsabschnittes. Nahe oder bündig des Eintrittsendes und/oder des Austrittsendes ist jeweils ein scheibenförmiger Wabenkörper angeordnet. Eine durch das Eintrittsende eintretende Abgasströmung passiert den scheibenförmigen Wabenkörper an dem Eintrittsende. Wenn die Abgasströmung den Rohrleitungsabschnitt passiert hat, verlässt sie den Rohrleitungsabschnitt durch das Austrittsende. Innerhalb des Rohrleitungsabschnitts kann zwischen dem Eintrittsende und dem Austrittsende eine Strömungsrichtung für die Abgasströmung angenommen werden. Die Zugabevorrichtung befindet sich in Strömungsrichtung hinter dem Eintrittsende und in Strömungsrichtung vor dem Austrittsende.

Die Zugabevorrichtung kann vorzugsweise einen Injektor zur kontrollierten Zugabe des flüssigen Additiv und/der eine Düse zur Zerstäubung des flüssigen Additivs aufweisen. Eine Düse der Zugabevorrichtung ist vorzugsweise dazu eingerichtet, das flüssige Additiv mit einem Sprühkegel in der Ausbuchtung und/oder Abgasströmung zu verteilen. Dieser Sprühkegel hat beispielsweise einen Öffnungswinkel zwischen 5° und 40°, wobei eine zentrische Lage der Zugaberichtung angenommen werden kann. An der Zugabevorrichtung sind vorteilhafter Weise auch Mittel zur Verringerung einer Wärmeströmung zu einem in der Zugabevorrichtung angeordneten Injektor angeordnet. Diese Mittel können beispielsweise Wärmeabschirmbleche, Kühlrippen und/oder eine Flüssigkeitskühlung umfassen.

Die Ausbuchtung umfasst hierfür eine Öffnung, die der Fixierung der Zugabevorrichtung dient. Diese Öffnung kann in einer (flächigen) Flanke der Ausbuchtung angeordnet sein, wobei die Flanke und ein gegenüber positionierter Wabenkörper einen Winkel bilden. Damit ist sichergestellt, dass die Zugaberichtung der Zugabevorrichtung mit einem flachen Winkel auf das Zentrum des Wabenkörpers weist. Regelmäßig entspricht dabei die Zugaberichtung der Zentrumsachse der Öffnung. Die Orientierung der Zugaberichtung bzw. Zentrumsachse kann in Strömungsrichtung oder entgegen der Strömungsrichtung ausgeführt sein.

Zumindest einer der scheibenförmigen Wabenkörper der Vorrichtung und bevorzugt alle scheibenförmigen Wabenkörper der Vorrichtung umfassen metallische Folien. Der scheibenförmige Wabenkörper besteht vorzugsweise aus metallischen Folien, die gewickelt, gewunden und/oder gestapelt sind. Vorzugsweise sind die Wabenkörper aus einem Stapel von metallischen Folien hergestellt, welcher s-förmig gewunden ist (so genannte S-Form). Falls mehrere Stapel verwendet werden, können diese als u-förmig und/oder v-förmig gebogene Anordnung nebeneinander angeordnet und miteinander gewunden in ein Gehäuse eingebracht sein (so genannte SM-Form). Beiden Ausgestaltungen ist üblicherweise gemein, dass alle Enden der Stapel nach außen hin gerichtet sind (also an einem Gehäuse anliegen), während die Biegungen (s, v, u) innen positioniert sind. In dem Stapel liegen vorzugsweise abwechselnd gewellte Metallfolien und glatte Metallfolien vor, die jeweils Kanäle des Wabenkörpers begrenzen. Die Wände der Kanäle können glatt (in Verlaufsrichtung der Kanäle eben und/oder frei von Einbauten) sein und/oder Vorsprünge, Schaufeln, Löcher und/oder Umlenkflächen für das Abgas (zusammen auch Struktur genannt) auf weisen. So kann eine Abgasströmung, welche die scheibenförmigen Wabenkörper passiert, vergleichmäßigt und/oder vermischt werden (z.B. bezüglich der Strömungsgeschwindigkeit, der Teilströmungsrichtung, der Temperatur und/oder ähnlichem).

Die scheibenförmigen Wabenkörper an dem Eintrittsende und/oder an dem Austrittsende können einerseits der Vergleichmäßigung der Strömung dienen. Hierdurch ist es ermöglicht, dass die Zugabevorrichtung das flüssige Additiv der Abgasströmung weitgehend unbeeinflusst von weiteren Komponenten innerhalb der Abgasbehandlungsvorrichtung zuführen kann. Die scheibenförmigen Wabenkörper lösen in der Abgasströmung vorliegende Wirbel vorzugsweise möglichst weitgehend auf und gewährleisten damit im Bereich der Additivzugabe definierte Strömungsbedingungen. Ein (glatter) scheibenförmiger Wabenkörper an dem Austrittsende vergleichmäßigt die austretende Abgasströmung, welche mit dem flüssigen Additiv durchmischt ist. Der scheibenförmige Wabenkörper hat eine Wabenkörperachse, die im Zentrum des Wabenkörpers liegt. Die Kanäle des Wabenkörpers erstrecken sich vorzugsweise parallel zu der Wabenkörperachse. Zwischen der Wabenkörperachse und der Zugaberichtung existiert bevorzugt ein Auftreffwinkel zwischen 0° und 90° [Grad], insbesondere zwischen 0 und 45 Grad. Dieser Winkel existiert damit bevorzugt auch zwischen der Wabenkörperachse und einer zentralen Achse des Sprühkegels.
Wenigstens ein scheibenförmiger Wabenkörper kann auch mit einer elektrischen Heizung ausgeführt sein. Bevorzugt ist hierbei, dass dabei zumindest ein Teil der Wände des Wabenkörpers geregelt von Strom durchströmt werden und sich damit aufgrund des elektrischen Widerstands erhitzen. Falls erforderlich, kann der scheibenförmige Wabenkörper auch mehrere Zonen aufweisen, die unabhängig voneinander aktiviert/deaktiviert werden können. Bevorzugt ist, dass zumindest der scheibenförmige Wabenkörper mit einer elektrischen Heizung ausgeführt ist, auf den das flüssige Additiv aufgegeben wird. Erfindungsgemäß ist einer der beiden scheibenförmigen Wabenkörper an dem Eintrittsende oder an dem Austrittsende konusartig geformt. Hiermit ist insbesondere gemeint, dass zumindest ein scheibenförmiger Wabenkörper nach Art eines Konus aufgebaut ist. Dabei können sich die Kanäle ebenfalls konusförmig erweitern/verengen. Weiterhin ist möglich, dass auch hierbei die Wände der Kanäle glatt (in Verlaufsrichtung der Kanäle eben und/oder frei von Einbauten) sein und/oder Vorsprünge, Schaufeln, Löcher und/oder Umlenkflächen für das Abgas (zusammen auch Struktur genannt) aufweisen können. Bevorzugt ist, dass zumindest der scheibenförmige Wabenkörper nach Art eines Konus ausgeführt ist, auf den das flüssige Additiv aufgegeben wird. Ob sich der konusartig geformte Wabenkörper bzw. die Kanäle des Wabenkörpers erweitern oder verengen, wird ausgehend von der Richtung der Abgasströmung durch die Vorrichtung betrachtet.
Besonders vorteilhaft ist es, wenn der Wabenkörper an dem Austrittsende konusartig geformt ist. Das mit der Zugabevorrichtung zugeführte flüssige Additiv trifft auf den Wabenkörper an dem Austrittsende. Durch die Konusform wird die Wahrscheinlichkeit erhöht, dass das flüssige Additiv auf die Kanalwandungen des Wabenkörpers trifft und dort verdampft. Auch durch Umlenkflächen oder Schaufeln wird die Wahrscheinlichkeit des Auftreffens des flüssigen Additivs erhöht, wobei dann insbesondere auch eine Verdampfung auf den Schaufeln bzw. den Umlenkflächen erfolgt.

Außerdem ist die Vorrichtung vorteilhaft, wenn zwischen dem scheibenförmigen Wabenkörper an dem Eintrittsende und der Zugabevorrichtung in dem Rohrleitungsabschnitt eine Düse vorgesehen ist, mit der die Abgasströmung in dem Rohrleitungsabschnitt zentral gebündelt wird. Eine solche Düse kann beispielsweise mit einem sich kontinuierlich verengenden rohrförmigen Bauteil gebildet sein, das in den Rohrleitungsabschnitt eingesetzt ist. Die so gebündelte Abgasströmung nimmt das mit der Zugabevorrichtung zugeführte flüssige Additiv besonders effektiv auf.

Durch die beschriebene Vorrichtung wird ein Abgasreinigungsmodul bereitgestellt, welches in verschiedene Abgasbehandlungsvorrichtungen integrierbar ist. Bei der Integration dieses Abgasreinigungsmodul in eine Abgasbehandlungsvorrichtung muss insbesondere die im Bereich der Zugabevorrichtung auftretende Abgasströmung nicht gesondert für die Auslegung berücksichtigt werden. Die Zugabe von flüssigem Additiv und die Verteilung des flüssigen Additivs in der Strömung erfolgt durch die beschriebene Vorrichtung vorzugsweise unabhängig von angrenzenden Komponenten. Insbesondere ist keine individuelle Anpassung der Zugabevorrichtung an verschiedene vorgelagerte und/oder nachgeordnete Komponenten in der Abgasbehandlungsvorrichtung notwendig. Auch Komponenten einer Abgasbehandlungsvorrichtung, die in Strömungsrichtung nach der beschriebenen Vorrichtung angeordnet sind, können unabhängig von der Zugabe von flüssigem Additiv gestaltet sein.

Die beschriebene Vorrichtung ist besonders vorteilhaft, wenn die Länge des Rohrleitungsabschnitts von dem Eintrittsende zum Austrittsende mehr als dem Zweifachen und weniger als dem Fünffachen eines Durchmessers des Rohrleitungsabschnitts entspricht. Mit dem Durchmesser ist der (über die Länge überwiegend vorliegende) Durchmesser des Rohrleitungsabschnitts gemeint (ohne Höhe der Ausbuchtung) - nachfolgend auch als "hauptsächlicher Durchmesser" bezeichnet. Durch die gewählte Länge des Rohrleitungsabschnitts kann einerseits eine gleichmäßige Verteilung des flüssigen Additivs in der Abgasströmung sichergestellt werden. Andererseits ist die Baulänge der Vorrichtung so gering, dass die Vorrichtung ohne Weiteres in eine Abgasbehandlungsvorrichtung (auch nachträglich) integriert werden kann. Der Durchmesser der Abgasbehandlungsvorrichtung (im Automobilbau) liegt vorzugsweise zwischen 50 mm [Millimeter] und 200 mm, besonders bevorzugt zwischen 60 mm und 130 mm.

Die Zugabevorrichtung ist in dem Rohrleitungsabschnitt ausgehend von dem Einströmlänge vorzugsweise nach einer Einströmlänge von zumindest 100 mm angeordnet. Die Einströmlänge beschreibt einen Abstand zwischen einer Austrittsfläche des zumindest einen scheibenförmigen Wabenkörpers an dem Eintrittsende und einer gedachten (senkrechten) Schnittebene durch den Rohrleitungsabschnitt, in dem sich die Zugabevorrichtung und insbesondere ein Eintrittspunkt für flüssiges Additiv in den Rohrleitungsabschnitt an der Zugabevorrichtung befindet. In Strömungsrichtung von dieser gedachten Schnittebene ausgehend existiert vorzugsweise eine Abströmlänge von zumindest 100 mm bis zu einer Eintrittsfläche eines weiteren scheibenförmigen Wabenkörpers bzw. des Austrittsendes.

Weiterhin ist bevorzugt, wenn der mindestens eine scheibenförmige Wabenkörper an dem Eintrittsende eine Kanaldichte von 20 cpsi bis 200 cpsi (Kanäle pro Quadratzoll) aufweist. Besonders bevorzugt liegt die Kanaldichte in dem scheibenförmigen Wabenkörper an dem Eintrittsende von 40 cpsi bis 100 cpsi. 100 cpsi entsprechen einer Kanaldichte von 15,5 Kanälen pro Quadratzentimeter. Durch eine derartig gewählte Kanaldichte des scheibenförmigen Wabenkörpers an dem Eintrittsende kann eine ausreichende Vergleichmäßigung der in die Vorrichtung eintretenden Abgasströmung erreicht werden, so dass die Zugabe von flüssigem Additiv mit der Zugabevorrichtung unbeeinflusst von in Strömungsrichtung der Vorrichtung vorgelagerten Abgasreinigungskomponenten erfolgen kann.

Der zumindest eine scheibenförmige Wabenkörper an dem Austrittsende weist vorzugsweise ebenfalls eine Kanaldichte von 20 cpsi (Kanäle pro Quadratzoll) bis 200 cpsi auf, insbesondere jedoch von 40 bis 100 cpsi.

Außerdem ist die Vorrichtung vorteilhaft, wenn der Rohrleitungsabschnitt zwischen dem scheibenförmigen Wabenkörper an dem Austrittsende und dem Austrittsende einen Strömungsausrichtungsabschnitt hat, in dem der Querschnitt des Rohrleitungsabschnitts zumindest teilweise verschoben ist. Dabei wird eine Abgasströmung beim Durchströmen des Strömungsausrichtungsabschnittes ausgerichtet. Der verschobene Querschnitt wird ausgehend von einer zylindrischen Grundform des Rohrleitungsabschnittes betrachtet. Der verschobene Querschnitt ist gegenüber dem Querschnitt der zylindrischen Grundform zumindest teilweise verschoben. Der verschobene Querschnitt kann gegenüber dem Querschnitt der zylindrischen Grundform auch verengt oder erweitert sein.

Bei dieser Ausführungsvariante ist der Wabenkörper an dem Austrittsende nicht direkt an dem Austrittsende angeordnet, sondern zwischen dem Austrittsende und dem Wabenkörper befindet sich an dem Austrittsende noch der Strömungsausrichtungsabschnitt. In einer besonders bevorzugten Ausführungsform ist der Strömungsausrichtungsabschnitt so geformt, dass das Austrittsende der Vorrichtung mit dem Eintrittsende der Vorrichtung fluchtet. Der Strömungsausrichtungsabschnitt ist insbesondere dann vorgesehen, wenn der Wabenkörper an dem Austrittsende schräg (in einem Anstellwinkel zur Rohrachse) und/oder versetzt zu einer zylindrischen Grundform des Rohrleitungsabschnittes angeordnet ist. Dann kann durch den Strömungsausrichtungsabschnitt die fluchtende Anordnung von Eintrittsende und Austrittsende wieder hergestellt werden.

Der Strömungsausrichtungsabschnitt kann zumindest einen Vorsprung und zumindest einen Rücksprung aufweisen. Mit einem Vorsprung ist eine Bereich einer Wandung des Rohrleitungsabschnittes gemeint, durch den ein Innenraum des Rohrleitungsabschnittes verkleinert ist. Bei einer Blickrichtung durch das Austrittsende in den Rohrleitungsabschnitt hinein, ist ein Vorsprung innerhalb des Rohrleitungsabschnittes zu sehen. Durch einen Vorsprung wird der Rohrleitungsabschnitt zumindest bereichsweise verengt. Ein Vorsprung kann durch eine Vorsprungshöhe definiert werden, um die der Vorsprung gegenüber dem Austrittsende bzw. einer zylindrischen Grundform in den Rohrleitungsabschnitt hinein ragt. Mit einem Rücksprung ist ein Bereich eines Rohrleitungsabschnittes gemeint, durch den ein Innenraum des Rohrleitungsabschnittes vergrößert ist. Bei einer Blickrichtung durch das Austrittsende in den Rohrleitungsabschnitt hinein, ist ein Rücksprung außerhalb des Rohrleitungsabschnittes zu erkennen. Ein Rücksprung kann durch eine Rücksprungstiefe definiert werden, um die der Rücksprung gegenüber dem Austrittsende bzw. einer zylindrischen Grundform aus dem Rohrleitungsabschnitt nach außen hervortritt.

Vorzugsweise ist in dem Strömungsausrichtungsabschnitt an dem Rohrleitungsabschnitt gegenüberliegend zu der Zugabevorrichtung ein Rücksprung angeordnet, während auf der Seite der Zugabevorrichtung ein Vorsprung angeordnet ist. Hierdurch wird eine besonders gleichmäßige Ausrichtung der Abgasströmung am Austrittsende erreicht, wobei besonders wenig Verwirbelungen in der Abgasströmung ausgelöst werden.

Gemäß einer weiteren Ausführungsvariante sind in dem Strömungsausrichtungsabschnitt an dem Rohrleitungsabschnitt sowohl gegenüberliegend zu der Zugabevorrichtung als auch auf der Seite der Zugabevorrichtung jeweils zumindest ein Rücksprung und zumindest ein Vorsprung angeordnet. Vorzugsweise ist die Wand des Rohrleitungsabschnittes dann nach Art einer Wellenform gestaltet. Insbesondere wenn der Wabenkörper an dem Austrittsende zur Rohrachse des Rohrleitungsabschnittes in einem Anstellwinkel (schräg) angeordnet ist, kann durch geeignet gestaltete Vorsprünge und Rücksprünge mit einer Wellenform die Abgasströmung vergleichmäßigt werden. Die Wellenform ist dann vorzugsweise zum Anstellwinkel des Wabenkörpers am Austrittsende entgegengesetzt ausgerichtet.

Im Bereich des Strömungsausrichtungsabschnittes kann in dem Rohrleitungsabschnitt auch mindestens eine Schaufel angeordnet sein. Die Schaufel kann die Wirkung der Vorsprünge und/oder Rücksprünge unterstützen und die Vergleichmäßigung der Abgasströmung an dem Austrittsende verbessern. Insbesondere kann eine Schaufel von einer der Zugabevorrichtung gegenüberliegenden Seite der Vorrichtung in den Rohrleitungsabschnitt hinein ragen. Die Schaufel weist vorzugsweise eine gekrümmte Oberfläche auf, über die die Abgasströmung umgelenkt wird.

Der Ausrichtungsabschnitt hat vorzugsweise eine Abschnittslänge, die weniger als dem halben Durchmesser des Rohrleitungsabschnittes entspricht. Durch eine solche Länge des Ausrichtungsabschnittes kann eine besonders kompakte Bauweise der Vorrichtung erreicht werden. Gleichzeitig ist eine effektive Ausrichtung der Abgasströmung im Ausrichtungsabschnitt möglich, wenn die Vorsprünge und Rücksprünge geeignet gestaltet sind.

Die Vorrichtung ist weiter vorteilhaft, wenn ein Durchmesser des Rohrleitungsabschnitts sich zwischen dem mindestens einen scheibenförmigen Wabenkörper an dem Eintrittsende und der Zugabevorrichtung in einem Erweiterungsabschnitt konusförmig erweitert. Eine Erweiterung des Durchmessers bedingt gleichzeitig eine Erweiterung der Querschnittsfläche des Rohrleitungsabschnittes. In dem Erweiterungsabschnitt erweitert sich eine Querschnittsfläche vorzugsweise um 50 % bis 100 % gegenüber der Querschnittsfläche des Rohrleitungsabschnittes. Der Durchmesser des Rohrleitungsabschnitts hinter der konusförmigen Erweiterung entspricht vorzugsweise dem hauptsächlichen Durchmesser des Rohrleitungsabschnitts. Der Durchmesser an dem Eintrittsende ist dementsprechend vorzugsweise gegenüber dem hauptsächlichen Durchmesser verkleinert. Durch die konusförmige Erweiterung wird die Abgasströmung hinter dem scheibenförmigen Wabenkörper an dem Eintrittsende abgebremst. Damit kann die Durchströmungsgeschwindigkeit reduziert und die Aufenthaltszeit des Abgases für die Zugabe des Additivs vergrößert werden, wobei gleichzeitig ein geringerer Einfluss auf die Verteilung des Additivs erreicht werden kann.

Zusätzlich zu der konusförmigen Erweiterung hinter dem Eintrittsende kann vor dem scheibenförmigen Wabenkörper an dem Austrittsende bzw. an dem Austrittsende selbst eine konusförmige Verjüngung des Rohrleitungsabschnitts vorgesehen sein.

Weiterhin vorteilhaft ist die Vorrichtung, wenn der Rohrleitungsabschnitt zwischen der Zugabevorrichtung und dem Austrittsende eine Biegung mit einem Winkel von 10° bis 45° [Grad] aufweist. Eine derartige Biegung lenkt eine durch den Rohrleitungsabschnitt verlaufende Abgasströmung um. Hierdurch entsteht ein Druckunterschied in der Abgasströmung über die Querschnittsfläche des Rohrleitungsabschnitts, der eine vorteilhafte Verteilung des flüssigen Additivs in der Abgasströmung ermöglichen kann. Beispielsweise kann durch eine derartige Biegung und den resultierenden Druckunterschied die Abgasströmung hin zu der Zugabevorrichtung gedrückt werden bzw. eine Querströmung im Abgas entstehen. Hierdurch wird das zugegebene flüssige Additiv über den gesamten Querschnitt der des Rohrleitungsabschnittes in der Abgasströmung verteilt. Durch einen scheibenförmigen Wabenkörper an dem Austrittsende kann der durch die Biegung entstehende Wirbel bzw. die durch die Biegung entstehende Druckverteilung in der Abgasströmung zumindest teilweise wieder aufgelöst werden, so dass nachfolgende Komponenten einer Abgasbehandlungsvorrichtung, in die die beschriebene Vorrichtung integriert ist, hierdurch nicht wesentlich beeinflusst werden.

Weiterhin ist die Vorrichtung bevorzugt, wenn der Rohrleitungsabschnitt zwischen der Zugabevorrichtung und der Biegung einen geraden Abschnitt aufweist. Ein derartiger gerader Abschnitt (ggf. auch als Verlängerung bzw. Bestandteil des Geradenabschnitts) kann eine Länge aufweisen, die zumindest der Hälfte und maximal dem Dreifachen eines hauptsächlichen Durchmessers des Rohrleitungsabschnitts entspricht. Ein derartiger gerader Abschnitt stellt eine Art Mischstrecke dar, in welcher die (möglichst vollständige) Durchmischung von Abgasströmung und Additiv erfolgen kann.

Weiterhin ist die Vorrichtung vorteilhaft, wenn die Zugabevorrichtung eine Zugaberichtung definiert, wobei die Zugaberichtung einen Auftreffwinkel für das flüssige Additiv von weniger als 90° zu dem scheibenförmigen Wabenkörper vorgibt. Vorzugsweise ist der Auftreffwinkel kleiner als 60° und besonders bevorzugt kleiner als 30°.

Mit dem Auftreffwinkel ist ein Winkel zwischen der Zugaberichtung und einer normalen Richtung zu dem scheibenförmigen Wabenkörper (an dem Austrittsende bzw. Eintrittsende) gemeint. Zwischen einer Oberfläche des scheibenförmigen Wabenkörpers (die im rechten Winkel zu der normalen Richtung des Wabenkörpers steht) und der Zugaberichtung existiert dementsprechend vorzugsweise ein Winkel von mehr als 60°. Dies erlaubt die flache Zugabe des Additivs in den Rohrleitungsabschnitt mit einem relativ langen Weg bis hin zum Zentrum des Wabenkörpers.

Eine Zugabevorrichtung hat vorzugsweise eine Düse und/oder einen Injektor. Dieser Injektor hat vorzugsweise eine Einbauachse. Die Zugaberichtung entspricht typischerweise besagter Einbauachse von dem Injektor oder der Düse. Die Einbauachse (bzw. die Zentrumsachse der dafür vorgesehenen Öffnung) und die Zugaberichtung entsprechen vorzugsweise auch einer Achse bzw. einer Mittellinie eines Sprühkegels der Zugabevorrichtung. Das mit der Zugabevorrichtung zugegebene flüssige Additiv kann auf den an dem Austrittsende vorliegenden scheibenförmigen Wabenkörper auftreffen. Hierzu muss der Abstand zwischen der Zugabevorrichtung und dem scheibenförmigen Wabenkörper an dem Austrittsende in Abhängigkeit der Sprüheigenschaften der Zugabevorrichtung und der Abgasströmung geeignet gestaltet sein.

Um eine gleichmäßige Verteilung des flüssigen Additivs in der Abgasströmung (und im Falle eines Auftreffens auf dem scheibenförmigen Wabenkörper an dem Austrittsende) zu gewährleisten, ist es vorteilhaft, wenn zwischen der Zugaberichtung der Zugabevorrichtung und dem scheibenförmigen Wabenkörper der oben beschriebene Auftreffwinkel von weniger als 30°, vorzugsweise weniger als 15° und besonders bevorzugt weniger als 10° existiert.

Auch vorteilhaft ist die Vorrichtung, wenn der scheibenförmige Wabenkörper, auf welchen die Zentrumsachse ausgerichtet ist, mit einem Anstellwinkel zu einer Rohrachse des Rohrleitungsabschnittes angeordnet ist. Das heißt mit anderen Worten beispielsweise auch, dass der scheibenförmige Wabenkörper gegenüber der Rohrachse um den Anstellwinkel geneigt ist. Der Anstellwinkel liegt vorzugsweise zwischen 2° und 30°, bevorzugt zwischen 5° und 30° und besonders bevorzugt zwischen 10° und 30°.

Der Anstellwinkel und der Auftreffwinkel zusammen ergeben einen Gesamtwinkel zwischen der Rohrachse und der Zugaberichtung bzw. der Zentrumsachse der Öffnung.

Darüber hinaus ist die Vorrichtung vorteilhaft, wenn der mindestens eine scheibenförmige Wabenkörper (an dem Eintrittsende und/oder der mindestens eine scheibenförmige Wabenkörper an dem Austrittsende jeweils) eine Wabenkörperlänge von weniger als 20 % des (hauptsächlichen) Durchmessers des Rohrleitungsabschnitts aufweisen. Die beiden scheibenförmigen Wabenkörper haben vorzugsweise eine Länge von weniger als 50 mm, bevorzugt weniger als 40 mm und besonders bevorzugt weniger als 30 mm. Somit kann einerseits erreicht werden, dass die gewünschten Vergleichmäßigungen der in die Vorrichtung eintretenden Strömung und/oder der aus der Vorrichtung austretenden Strömung erreicht werden. Andererseits wird der Strömungswiderstand der Wabenkörper durch diese besonders kurze Gestaltung reduziert.

Die scheibenförmigen Wabenkörper können jeweils eine wirksame Beschichtung aufweisen. Beispielsweise (bei einer Zugabe des Additivs in Strömungsrichtung) kann der scheibenförmige Wabenkörper an dem Eintrittsende eine katalytisch wirkende Beschichtung aufweisen, um Abgasbestandteile zu verbrennen und die Temperatur der Abgasströmung zu erhöhen (Oxidationskatalysator). Durch eine erhöhte Temperatur wird die spätere Umsetzung des flüssigen Additivs verbessert. Der scheibenförmige Wabenkörper an dem Austrittsende weist vorzugsweise eine hydrolytisch wirkende Beschichtung auf, wenn Reduktionsmittel (in Strömungsrichtung) zugegeben wird. Insbesondere wenn Reduktionsmittelvorläuferlösung (und besonders bevorzugt Harnstoff-Wasser-Lösung) ist, kann durch diese Hydrolysebeschichtung erreicht werden, dass das flüssige Additiv in Ammoniak umgesetzt wird, welcher in in Abgasströmungsrichtung nachfolgenden Abgasreinigungskomponenten beispielsweise zur Durchführung des Verfahrens der selektiven katalytischen Reduktion genutzt werden kann. Erfolgt eine Zugabe des Additivs entgegen der Strömungsrichtung, kann (auch) der Wabenkörper am Eintrittsende (teilweise) eine hydrolytisch wirkende Beschichtung aufweisen.

In der Vorrichtung können zwischen dem Eintrittsende und dem Austrittsende auch noch weitere Mittel zur Beeinflussung des Abgases vorgesehen sein. Beispielsweise ist es möglich, dass unmittelbar nachfolgend zu der Zugabevorrichtung und/oder unmittelbar vor der Zugabevorrichtung und/oder benachbart zum Austrittsende ein statisches Mischelement vorgesehen ist. Ein derartiges Mischelement kann beispielsweise aus Leitblechen aufgebaut sein, welche einen Wirbel in der Abgasströmung induzieren und so zu einer intensiven Verteilung des flüssigen Additivs in der Abgasströmung beitragen. Ebenso kann das statische Mischelement mit einem (scheibenförmigen) Wabenkörper gebildet sein, der Kanalwänden hat, die Löcher (insbesondere mehrere benachbarte Kanäle verbindende Löcher) und/oder in den Kanal hineinragende Leitschaufeln aufweisen.

Die Erfindung findet insbesondere Anwendung in einem Kraftfahrzeug, aufweisend eine Verbrennungskraftmaschine und eine Abgasbehandlungsvorrichtung zur Reinigung der Abgase der Verbrennungskraftmaschine, wobei die Abgasbehandlungsvorrichtung zumindest eine erfindungsgemäße Vorrichtung aufweist. Dabei ist die Vorrichtung insbesondere mit den oben beschriebenen Anschlussmitteln an eine angrenzende Abgasleitung (gasdicht und dauerhaft) befestigt.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste nicht erfindungsgemäße Variante der Vorrichtung,
- Fig. 2:: eine zweite nicht erfindungsgemäße Variante der Vorrichtung,
- Fig. 3:: eine dritte Ausführungsvariante der Vorrichtung,
- Fig. 4:: eine vierte nicht erfindungsgemäße Variante der Vorrichtung,
- Fig. 5:: eine fünfte nicht erfindungsgemäße Variante der Vorrichtung,
- Fig. 6:: ein Kraftfahrzeug, aufweisend eine solche Vorrichtung,
- Fig. 7:: einen Rohrleitungsabschnitt für eine Vorrichtung,
- Fig. 8:: eine sechste Ausführungsvariante der Vorrichtung,
- Fig. 9:: eine siebte nicht erfindungsgemäße Variante der Vorrichtung, und
- Fig. 10:: eine achte nicht erfindungsgemäße Variante der Vorrichtung.

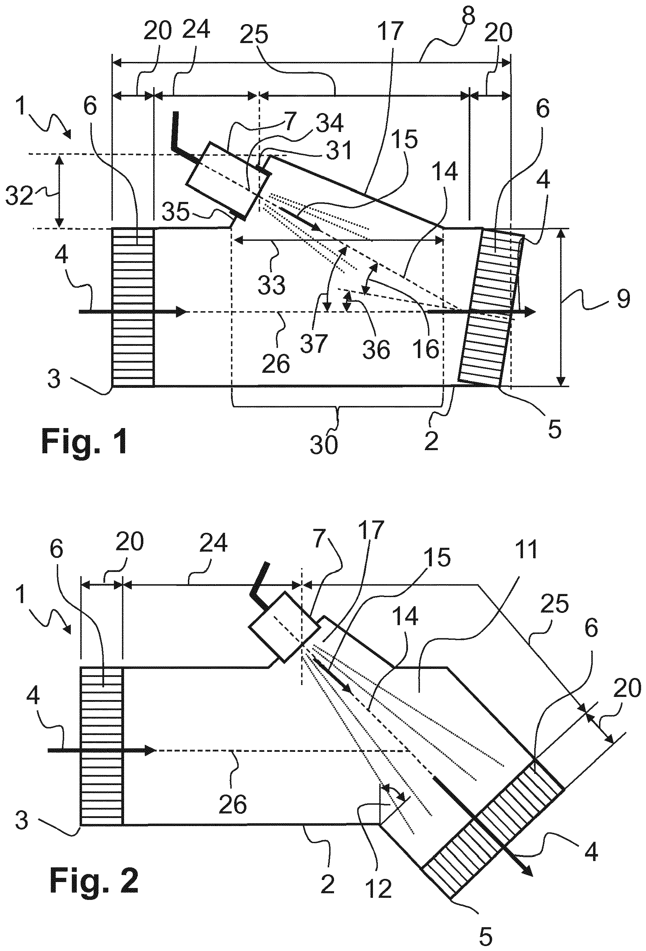

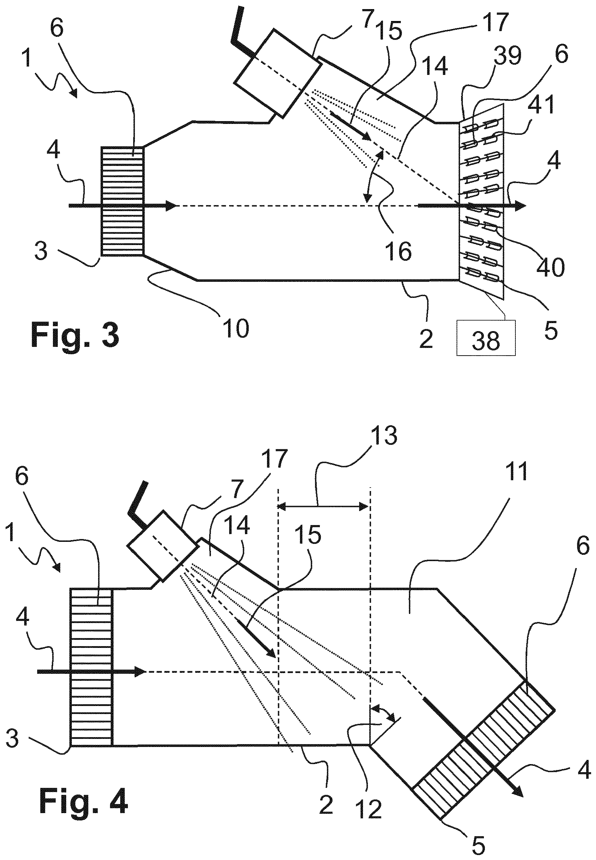

Die Fig. 1 bis 5 stellen jeweils verschiedene Varianten einer beschriebenen Vorrichtung 1 dar, wobei nur Fig. 3 die Erfindung darstellt. Die in den Fig. 1 bis 5 übereinstimmenden Merkmale sollen hier zunächst gemeinsam erläutert werden. In den Fig. 1 bis 5 ist jeweils eine Vorrichtung 1 dargestellt, welche einen Rohrleitungsabschnitt 2 für eine Abgasströmung mit einem Eintrittsende 3 und einem Austrittsende 5 aufweist. An dem Eintrittsende 3 kann eine Abgasströmung 4 in die Vorrichtung 1 eintreten, welche an dem Austrittsende 5 wieder aus der Vorrichtung 1 austritt. An dem Eintrittsende 3 und an dem Austrittsende 5 ist jeweils mindestens ein scheibenförmiger Wabenkörper 6 angeordnet und zwischen dem Eintrittsende 3 und dem Austrittsende 5 ist eine Zugabevorrichtung 7 für ein flüssiges Additiv angeordnet in einer Ausbuchtung 17 des Rohrleitungsabschnittes 2 angeordnet.

In Fig. 1 und 2 werden verschiedene geometrische Beziehungen der verschiedenen Komponenten der Vorrichtung 1 zueinander erläutert. Diese Erläuterungen sind auch auf die Fig. 3 bis 5 übertragbar und sollen hier zunächst gemeinsam beschrieben werden. Die Vorrichtung 1 bzw. der Rohrleitungsabschnitt 2 weist jeweils eine Länge 8 und einen Durchmesser 9 auf. Die scheibenförmigen Wabenkörper 6 an dem Eintrittsende 3 und dem Austrittsende 5 haben jeweils eine Wabenkörperlänge 20. Der Rohrleitungsabschnitt 2 hat eine Rohrachse 26. Die Zugabevorrichtung 1 ist mit Bezug auf die Rohrachse 26 nach einer Einströmlänge 24 nach dem scheibenförmigen Wabenkörper 6 an dem Eintrittsende 3 angeordnet. Auf die Zugabevorrichtung 7 folgt nach einer Abströmlänge 25 entlang der Rohrachse 26 der scheibenförmige Wabenkörper 6 an dem Austrittsende 5. Einige Ausführungsvarianten der beschriebenen Vorrichtung 1 weisen einen Rohrleitungsabschnitt 2 mit einer Biegung 11 auf. Diese Biegung 11 ist beispielhaft in Fig. 2 dargestellt. Die Biegung 11 hat vorzugsweise einen Winkel 12. Die Biegung 11 ist in Fig. 2 mit einem Knick dargestellt. Die Biegung 11 kann auch ein kontinuierlicher Übergang zwischen einer ersten Richtung des Rohrleitungsabschnitts 2 an dem Einströmende 3 und einer zweiten Richtung des Rohrleitungsabschnitts 2 an dem Ausströmende 5 sein.

In Fig. 1 ist außerdem dargestellt, dass die Ausbuchtung 17 sich in einem Geradenabschnitt 30 des Rohrleitungsabschnittes 2. Die Ausbuchtung 17 erstreckt sich über eine Erstreckung 33. Die Erstreckung 33 kann auch als Länge der Ausbuchtung 17 bezeichnet werden. Die Ausbuchtung 17 hat außerdem eine Höhe 32. Die Ausbuchtung 17 steht mit der Höhe 32 über eine Grundform des Rohrleitungsabschnittes 2 hervor. Die Ausbuchtung 17 hat eine Flanke 35 mit einer Öffnung 31. In die Öffnung 31 ist die Zugabevorrichtung 7 eingesetzt. Die Öffnung 31 hat eine Zentrumsrichtung 34 die mittig auf den scheibenförmigen Wabenkörper 6 an dem Austrittsende 5 ausgerichtet. Die Zentrumsachse 34 entspricht vorzugsweise einer Achse 14 der Zugabevorrichtung 7 und einer Zugaberichtung 15 der Zugabevorrichtung 7.

In Fig. 1 ist beispielhaft dargestellt, dass die Zugabevorrichtung 7 eine Achse 14 aufweist und die Zugabevorrichtung 7 mit ihrer Achse 14 eine Zugaberichtung 15 definiert. Diese Zugaberichtung 15 steht zu einer normalen Richtung des scheibenförmigen Wabenkörper 6 an dem Austrittsende 5 in einem Auftreffwinkel 16. Dieser Auftreffwinkel 16 ist vorzugsweise kleiner als 90°, bevorzugt kleiner als 60° und besonders bevorzugt kleiner als 30°. Die normale Richtung des scheibenförmigen Wabenkörpers 6 an dem Austrittsende 5 muss nicht parallel zu der Rohrachse 26 sein. Es ist möglich, dass der scheibenförmige Wabenkörper 6 um einen Anstellwinkel 36 gegenüber der Rohrachse 26geneigt ist. Der Anstellwinkel 36 und der Auftreffwinkel 16 addiert ergeben einen Gesamtwinkel 37 zwischen der Rohrachse 26 und der Zugaberichtung 15 bzw. der Achse 14. Die hier für einen Wabenkörper am Austrittsende beispielhaft dargestellten Winkelbeziehungen können auch gelten, wenn die Achse 14 bzw. die Zugaberichtung 15, bzw. die Zentrumsachse 34 nicht auf einen scheibenförmigen Wabenkörper 6 an dem Austrittsende 5, sondern auf einen scheibenförmigen Wabenkörper 6 an dem Eintrittsende 3 der Vorrichtung 1 ausgerichtet sind.

In Fig. 2 ist gezeigt, wie die Rohrachse 26 liegt, wenn der Rohrleitungsabschnitt 2 eine Biegung 11 aufweist. Die Rohrachse 26 bildet vorzugsweise eine Mittellinie des Rohrleitungsabschnitts 2.

In Fig. 1 und 2 ist zu erkennen, wie der Ort, an dem die Zugabevorrichtung 7 in dem Rohrleitungsabschnitt 2 liegt, definiert ist. Der Punkt der Zugabevorrichtung 7, auf welchen sich die weiter oben beschriebene Einströmlänge 24 und die Abströmlänge 25 beziehen, ist vorzugsweise von dem Punkt definiert, an welchem das flüssige Additiv in den Rohrleitungsabschnitt 2 bzw. in die Abgasströmung 4 in dem Rohrleitungsabschnitt 2 eintritt. Dieser Punkt liegt vorzugsweise in einer Ebene, die senkrecht auf der Rohrachse 26 steht. Die Einströmlänge 24 und die Abströmlänge 25 werden vorzugsweise in Bezug auf diese gedachte Ebene bestimmt.

In Fig. 3 ist beispielhaft gezeigt, dass die Achse 14 der Zugabevorrichtung 7 und die Zugaberichtung 15, welche von der Achse 14 und der Zugabevorrichtung 7 definiert ist, in einem Auftreffwinkel 16 zu einer normalen Richtung des scheibenförmigen Wabenkörpers 6 an dem Austrittsende 5 stehen. Darüber hinaus ist in Fig. 3 ein Erweiterungsabschnitt 10 des Rohrleitungsabschnitts 2 gezeigt, an welchem sich der Rohrleitungsabschnitt 2 bzw. Durchmesser des Rohrleitungsabschnitts 2 erweitert. Der Erweiterungsabschnitt 10 ist konusförmig ausgestaltet und in einer Richtung der Abgasströmung 4 hinter dem scheibenförmigen Wabenkörper 6 an dem Eintrittsende und vor der Zugabevorrichtung 7 angeordnet.

Der der Zugabevorrichtung 7 nachgeordnete scheibenförmige Wabenkörper 6 weist zudem eine Konusform 39 auf. Die Kanäle 40 des scheibenförmigen Wabenkörpers 6 erweitern sich in Richtung der Abgasströmung und weisen eine Struktur 41 (z. B. nach Art von Leitschaufeln und/oder Löchern) auf. Weiterhin ist dieser scheibenförmige Wabenkörper 6 mit einer elektrischen Heizung 38 ausgeführt, die bedarfsgerecht aktiviert/deaktiviert werden kann. Dieser scheibenförmigen Wabenkörper 6 kann ebenfalls beschichtet sein.

In Fig. 4 ist gezeigt, dass sich zwischen der Zugabevorrichtung 7 und einer Biegung 11 des Rohrleitungsabschnitts 2 ein gerader Abschnitt 13 befinden kann, welcher als Mischstrecke für die Abgasströmung 4 und das flüssige Additiv wirken kann.

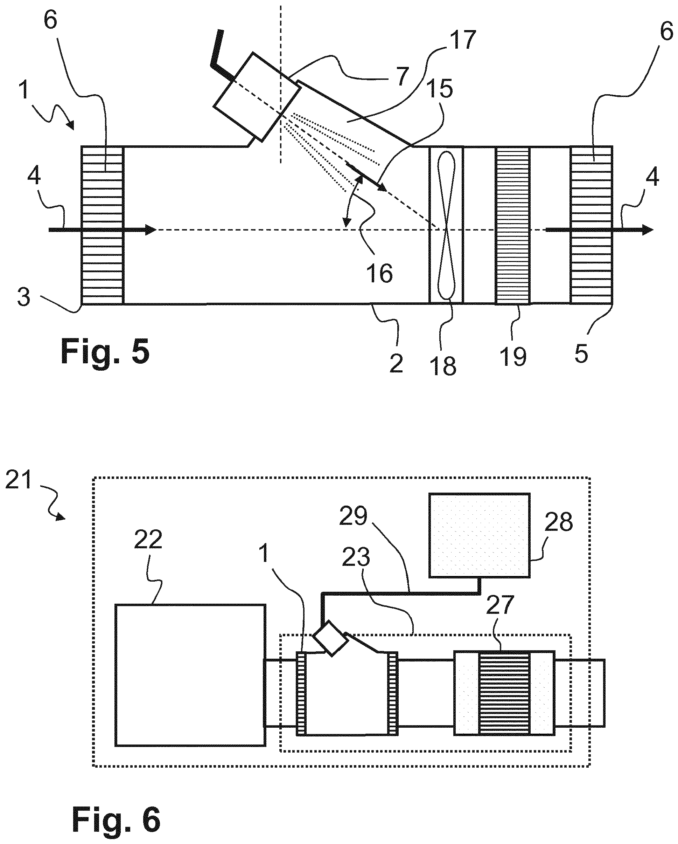

In Fig. 5 ist gezeigt, dass in der Vorrichtung 1 zusätzlich zu den scheibenförmigen Wabenkörpern 6 an dem Eintrittsende 3 und an dem Austrittsende 5 noch weitere Komponenten zur Abgasreinigung angeordnet sein können. Hier beispielhaft gezeigt ist ein Hydrolysekatalysator 19 und ein statischer Mischer 18, welche beide in Richtung der Abgasströmung 4 hinter der Zugabevorrichtung 7 angeordnet sind.

Bei den dargestellten Ausführungsvarianten der Vorrichtung kann ein Mischer und/oder ein Wabenkörper mit Vorsprüngen, Schaufeln, Löchern und/oder Umlenkflächen in der Kanalwand - wie oben beschrieben - generell auch (als letzte Komponente) am Austrittsende 5 positioniert sein.

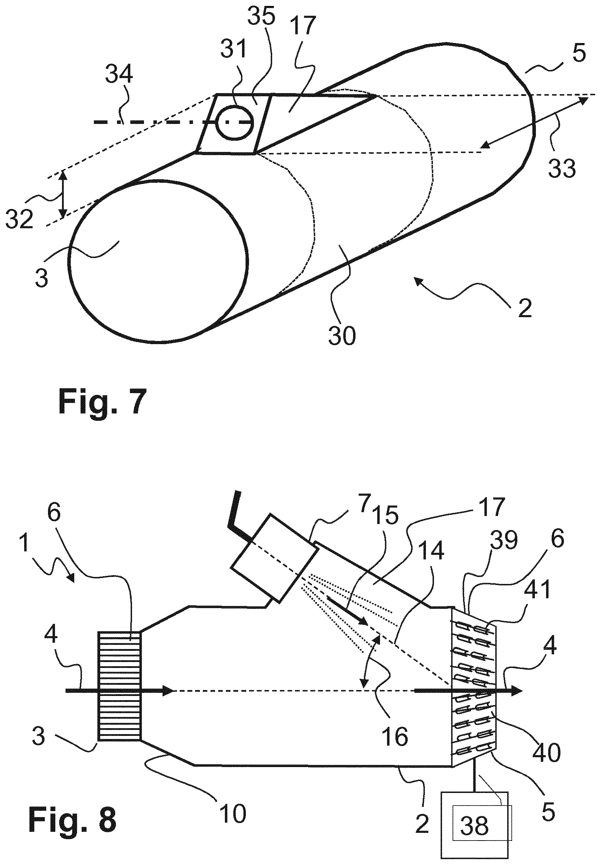

Fig. 6 zeigt ein Kraftfahrzeug 21, aufweisend eine Verbrennungskraftmaschine 22 und eine Abgasbehandlungsvorrichtung 23. In der Abgasbehandlungsvorrichtung 23 ist eine Vorrichtung 1 als Abgasreinigungsmodul integriert. Die hier nicht einzeln dargestellte Zugabevorrichtung der Vorrichtung 1 wird über eine Leitung 29 aus einem Tank 28 mit flüssigem Additiv versorgt. In der Abgasbehandlungsvorrichtung 23 ist zusätzlich ein SCR-Katalysator 27 vorgesehen. Über die Vorrichtung 1 wird der Abgasbehandlungsvorrichtung 23 vorzugsweise als flüssiges Additiv eine Reduktionsmittelvorläuferlösung und insbesondere wässrige Harnstoff-Lösung zugeführt. Mit dieser Reduktionsmittelvorläuferlösung bzw. mit Ammoniak, welcher sich aufgrund dieser Reduktionsmittelvorläuferlösung in der Abgasbehandlungsvorrichtung gebildet hat, kann in dem SCR-Katalysator 27 das Verfahren der selektiven katalytischen Reduktion zur Reinigung der Abgase der Verbrennungskraftmaschine 22 stattfinden. Die Fig. 7 zeigt einen Rohrleitungsabschnitt 2 für eine beschrieben Vorrichtung in einer dreidimensionalen, schematischen Ansicht. Zu erkennen ist die Ausbuchtung 17 an dem Rohrleitungsabschnitt 2 in einem Geradenabschnitt 30. Die Ausbuchtung 17 hat eine Höhe 32 und eine Erstreckung 33, wobei die Erstreckung 33 die Länge der Ausbuchtung 17 vorgibt. Durch die Ausbuchtung 17 wird eine Flanke 35 an dem Rohrleitungsabschnitt 2 in der Ausbuchtung 17 gebildet. An der Flanke 35 ist eine Öffnung 31 im Rohrleitungsabschnitt 2 vorhanden. Die Öffnung 31 weißt eine Zentrumsachse 34 auf. Die Fig. 8 zeigt eine Abwandlung der in Fig. 3 dargestellten Vorrichtung 1. Die meisten Merkmale stimmen mit der in Fig. 3 dargestellten Ausführungsvariante überein. Der der Zugabevorrichtung 7 nachgeordnete scheibenförmige Wabenkörper 6 weist auch eine Konusform 39 auf. Die Kanäle 40 des scheibenförmigen Wabenkörpers 6 verengen sich hier jedoch in Richtung der Abgasströmung 4 und weisen (optional) eine Struktur 41 (z. B. nach Art von Leitschaufeln und/oder Löchern) auf. Genauso wie auch gemäß Fig. 3 kann der Wabenkörper 6 eine Heizung 38 und eine Beschichtung aufweisen.

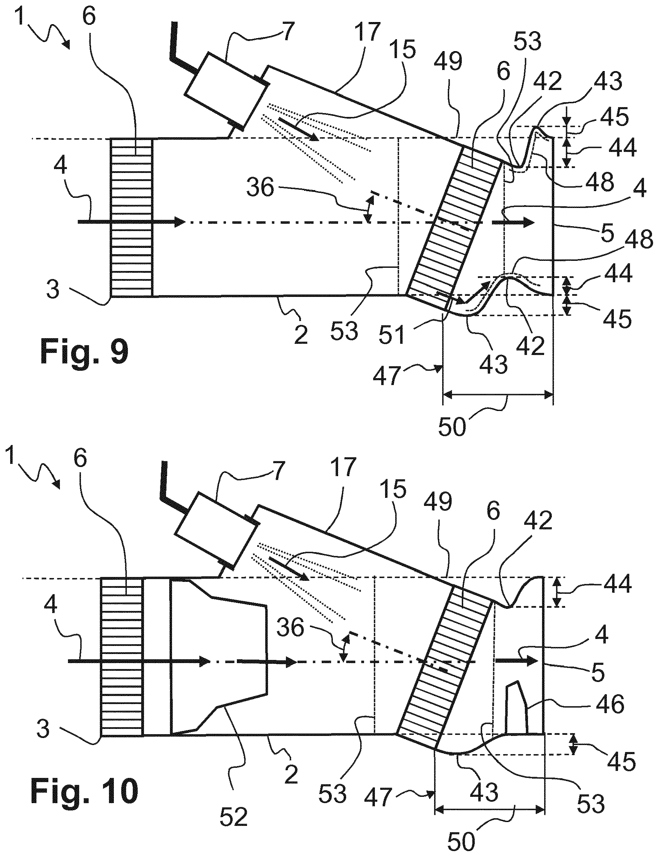

Die Fig. 9 und die Fig. 10 zeigen zwei weitere nicht erfindungsgemäße Varianten von Vorrichtungen
1. Auch diese Vorrichtungen 1 weisen jeweils einen Rohrleitungsabschnitt 2 mit einer Rohrachse 26 für die Abgasströmung 4 auf. Der Rohrleitungsabschnitt 2 erstreckt sich von einem Eintrittsende 3 bis zu einem Austrittsende 5. An dem Eintrittsende 3 und an dem Austrittsende 5 ist jeweils ein scheibenförmiger Wabenkörper 6 angeordnet. Zwischen den Wabenkörpern 6 hat der Rohrleitungsabschnitt eine Ausbuchtung 17, an der eine Zugabevorrichtung 7 für flüssiges Additiv angeordnet ist. Die Zugabevorrichtung 7 sprüht das flüssige Additiv mit einer Zugaberichtung 15 in den Rohrleitungsabschnitt 2 zu, wobei die Zugaberichtung 15 auf den Wabenkörper 6 an dem Austrittsende 5 ausgerichtet ist. Der Wabenkörper 6 an dem Austrittsende 5 ist mit einem Anstellwinkel 36 schräg zur Rohrachse 26 angeordnet. Zwischen dem Wabenkörper 6 am Austrittsende 5 und dem Austrittsende 5 selbst hat der Rohrleitungsabschnitt 2 noch einen Strömungsausrichtungsabschnitt 47.

Der Strömungsausrichtungsabschnitt 47 dient dazu, eine aus dem schrägen Wabenkörper 6 austretende Abgasströmung 4 auszurichten, so dass sie den Rohrleitungsabschnitt 2 wieder im Wesentlichen parallel zur Rohrachse 26 verlässt. Der Rohrleitungsabschnitt 2 hat in dem Strömungsausrichtungsabschnitt 47 einen Querschnitt 53, der gegenüber dem Querschnitt 53 einer zylindrischen Grundform 49 des Rohrleitungsabschnittes 2 verschoben ist. Mit dem Querschnitt 53 ist hier die für das Abgas frei durchströmbare Querschnittsfläche des Rohrleitungsabschnittes 2 gemeint. Um den verschobenen Querschnitt 53 auszubilden, hat der Strömungsausrichtungsabschnitt 47 Vorsprünge 42 und Rücksprünge 43. Die Vorsprünge 42 ragen jeweils um eine Vorsprungshöhe 45 ausgehend von einer zylindrischen Grundform 49 des Rohrleitungsabschnittes 2 in den Rohrleitungsabschnitt 2 hinein. Die Rücksprünge 43 ragen jeweils um eine Rücksprungstiefe 45 ausgehend von einer zylindrischen Grundform 49 des Rohrleitungsabschnittes 2 aus dem Rohrleitungsabschnitt 2 heraus. Der Strömungsausrichtungsabschnitt 47 hat eine Abschnittslänge 50.

Bei der Variante gemäß Fig. 9 sind sowohl auf der oberen Seite der Vorrichtung 1 an der Zugabevorrichtung 7 als auch an der unteren Seite der Vorrichtung 1 (gegenüberliegend zur Zugabevorrichtung 7) in dem Strömungsausrichtungsabschnitt 47 jeweils ein Vorsprung 42 und ein Rücksprung 44 vorgesehen. Der Rohrleitungsabschnitt 2 ist im Strömungsausrichtungsabschnitt 47 damit nach Art einer Wellenform 48 gestaltet. Durch Pfeile 51 ist hier angedeutet, dass die Wellenform 48 gegenüberliegend zur Zugabevorrichtung 7 zum Anstellwinkel 36 des Wabenkörpers 6 am Austrittsende 5 entgegengesetzt ist.

Bei der Variante gemäß Fig. 10 ist auf der oberen Seite der Vorrichtung 1 an der Zugabevorrichtung 7 ein Vorsprung 42 vorgesehen, während an der unteren Seite gegenüberliegend zur Zugabevorrichtung 7 ein Rücksprung 43 vorgesehen ist. Zusätzlich ist gemäß der Fig. 10 in dem Strömungsausrichtungsabschnitt 47 noch eine Schaufel 46 vorgesehen mit der die Ausrichtung einer Abgasströmung 4 unterstützt wird. Als zusätzliches Merkmal ist bei der Ausführungsvariante der Vorrichtung 1 in Fig. 10 eine Düse 52 zu erkennen mit der die Abgasströmung 4 hinter dem Wabenkörper 6 an dem Eintrittsende 3 gebündelt wird.

Die Düse 52 kann grundsätzlich auch als eine Alternative (Ersatz) zum ersten Wabenkörper 6 am Eintrittsende 3 eingesetzt werden, wobei die eingangsgestellte Aufgabe ebenfalls gelöst werden. Daher kann auch dieser Aufbau mit allen weiteren Merkmalen der hier vorgestellten Konfigurationen der Vorrichtung kombiniert werden und eine eigenständige Verbesserung gegenüber den bekannten Vorrichtungen darstellen. Die beschriebene Vorrichtung ermöglicht eine unproblematische Applikation einer Zufuhrvorrichtung für flüssiges Additiv in eine Abgasbehandlungsvorrichtung. Insbesondere für Kleinserien von Nutzfahrzeugen ist die beschriebene Vorrichtung vorteilhaft, weil die Gestaltung weiterer Komponenten eines Abgasreinigungssystems nicht auf die Zufuhrvorrichtung abgestimmt werden kann, sondern die beschriebene Vorrichtung als abgeschlossenes System betrachtet werden kann, in welches an dem Eintrittsende ein Abgasmassenstrom eintritt, der die Vorrichtung am Austrittsende wieder verlässt, wobei der Abgasmassenstrom dann flüssiges Additiv enthält. Auf innere Strömungsbedingungen in der Vorrichtung muss keine Rücksicht genommen werden.

### Bezugszeichenliste

- 1: Vorrichtung
- 2: Rohrleitungsabschnitt
- 3: Eintrittsende
- 4: Abgasströmung
- 5: Austrittsende
- 6: scheibenförmiger Wabenkörper
- 7: Zugabevorrichtung
- 8: Länge
- 9: Durchmesser
- 10: Erweiterungsabschnitt
- 11: Biegung
- 12: Winkel
- 13: gerader Abschnitt
- 14: Achse
- 15: Zugaberichtung
- 16: Auftreffwinkel
- 17: Ausbuchtung
- 18: statischer Mischer
- 19: Hydrolysekatalysator
- 20: Wabenkörperlänge
- 21: Kraftfahrzeug
- 22: Verbrennungskraftmaschine
- 23: Abgasbehandlungsvorrichtung
- 24: Einströmlänge
- 25: Abströmlänge
- 26: Rohrachse
- 27: SCR-Katalysator
- 28: Tank
- 29: Leitung
- 30: Geradenabschnitt
- 31: Öffnung
- 32: Höhe
- 33: Erstreckung
- 34: Zentrumsachse
- 35: Flanke
- 36: Anstellwinkel
- 37: Gesamtwinkel
- 38: Heizung
- 39: Konusform
- 40: Kanal
- 41: Struktur
- 42: Vorsprung
- 43: Rücksprung
- 44: Vorsprungshöhe
- 45: Rücksprungstiefe
- 46: Schaufel
- 47: Strömungsausrichtungsabschnitt
- 48: Wellenform
- 49: zylindrische Grundform
- 50: Abschnittslänge
- 51: Pfeil
- 52: Düse
- 53: Querschnitt

## Patentansprüche

1. Vorrichtung (1), aufweisend einen Rohrleitungsabschnitt (2) für eine Abgasströmung (4) mit einem Eintrittsende (3), einem Austrittsende (5), einem Geradenabschnitt (30) und einer Ausbuchtung (17) mit einer Öffnung (31) zur Montage einer Zugabevorrichtung (7) für ein flüssiges Additiv in dem Geradenabschnitt (30), wobei die Ausbuchtung (17) eine Höhe (32) und eine Erstreckung (33) hat, und weiter an dem Eintrittsende (3) und an dem Austrittsende (5) jeweils mindestens ein scheibenförmiger Wabenkörper (6) angeordnet ist, wobei eine Zentrumsachse (34) der Öffnung (31) auf einen der scheibenförmigen Wabenkörper (6) ausgerichtet ist, **dadurch gekennzeichnet, dass** die Erstreckung (33) der Ausbuchtung (17) mindestens doppelt so groß wie die Höhe(32) ist, und zumindest einer der beiden scheibenförmigen Wabenkörper (6) an dem Eintrittsende (3) oder an dem Austrittsende (5) konusartig geformt ist.

2. Vorrichtung (1) nach einem der vorhergehenden Patentansprüche, wobei zwischen dem scheibenförmigen Wabenkörper (6) an dem Eintrittsende (3) und der Zugabevorrichtung (7) in dem Rohrleitungsabschnitt (2) eine Düse vorgesehen ist, mit der die Abgasströmung (4) in dem Rohrleitungsabschnitt (2) zentral gebündelt wird.

3. Vorrichtung (1) nach einem der vorhergehenden Patentansprüche, wobei die Länge (8) des Rohrleitungsabschnitts (2) von dem Eintrittsende (3) zu dem Austrittsende (5) mehr als dem Zweifachen und weniger als dem Fünffachen eines Durchmessers (9) des Rohrleitungsabschnittes (2) entspricht.

4. Vorrichtung (1) nach einem der vorhergehenden Patentansprüche, wobei der mindestens eine scheibenförmige Wabenkörper (6) an dem Eintrittsende (3) eine Kanaldichte von 20 cpsi (Kanäle pro Quadratzoll) bis 200 cpsi aufweist.

5. Vorrichtung (1) nach einem der vorhergehenden Patentansprüche, wobei der Rohrleitungsabschnitt (2) zwischen dem scheibenförmigen Wabenkörper (6) an dem Austrittsende (5) und dem Austrittsende (5) einen Strömungsausrichtungsabschnitt (47) hat, in dem der Querschnitt (53) des Rohrleitungsabschnitts (2) zumindest teilweise verschoben ist.

6. Vorrichtung (1) nach einem der vorhergehenden Patentansprüche, wobei ein Durchmesser (9) des Rohrleitungsabschnittes (2) sich zwischen dem mindestens einen scheibenförmigen Wabenkörper (6) an dem Eintrittsende (3) und der Zugabevorrichtung (7) in einem Erweiterungsabschnitt (10) konusförmig erweitert.

7. Vorrichtung (1) nach einem der vorhergehenden Patentansprüche, wobei der Rohrleitungsabschnitt (2) zwischen der Zugabevorrichtung (7) und dem Austrittsende (5) eine Biegung (11) mit einem Winkel (12) von 10° und 45° aufweist.

8. Vorrichtung (1) nach einem der vorhergehenden Patentansprüche, wobei die Zugabevorrichtung (7) eine Zugaberichtung (15) definiert und die Zugaberichtung (15) einen Auftreffwinkel (16) für das flüssige Additiv von weniger als 90° zu dem scheibenförmigen Wabenkörper (6) vorgibt.

9. Vorrichtung (1) nach einem der vorhergehenden Patentansprüche, wobei der scheibenförmigen Wabenkörper (6), auf welchen die Zentrumsachse (34) ausgerichtet ist, mit einem Anstellwinkel (36) zu einer Rohrachse (26) des Rohrleitungsabschnittes (2) angeordnet ist.

10. Vorrichtung (1) nach einem der vorhergehenden Patentansprüche, wobei der mindestens eine scheibenförmige Wabenkörper (6) eine Wabenkörperlänge (20) von weniger als 30% des Durchmessers (9) des Rohrleitungsabschnitts (2) aufweist.

11. Kraftfahrzeug (21), aufweisend eine Verbrennungskraftmaschine (22) und eine Abgasbehandlungsvorrichtung (23) zur Reinigung der Abgase der Verbrennungskraftmaschine (22), wobei die Abgasbehandlungsvorrichtung (23) zumindest eine Vorrichtung (1) nach einem der vorhergehenden Patentansprüche aufweist.

## Claims

1. Device (1), having a pipeline section (2) for an exhaust-gas flow (4), said pipeline section having an inlet end (3), an outlet end (5), a rectilinear section (30) and a protuberance (17) with an opening (31) for the installation of a metering device (7) for a liquid additive in the rectilinear section (30), wherein the protuberance (17) has a height (32) and an extent (33), and furthermore, in each case at least one disk-shaped honeycomb body (6) is arranged at the inlet end (3) and at the outlet end (5), wherein a central axis (34) of the opening (31) is directed toward one of the disk-shaped honeycomb bodies (6), **characterized in that** the extent (33) of the protuberance (17) is at least twice as great as the height (32), and at least one of the two disk-shaped honeycomb bodies (6), at the inlet end (3) or at the outlet end (5), is of conical form.

2. Device (1) according to the preceding patent claim, wherein a nozzle is provided in the pipeline section (2) between the disk-shaped honeycomb body (6) at the inlet end (3) and the metering device (7), by means of which nozzle the exhaust-gas flow (4) is focused centrally in the pipeline section (2).

3. Device (1) according to either of the preceding patent claims, wherein the length (8) of the pipeline section (2) from the inlet end (3) to the outlet end (5) corresponds to more than two times, and less than five times, a diameter (9) of the pipeline section (2).

4. Device (1) according to one of the preceding patent claims, wherein the at least one disk-shaped honeycomb body (6) at the inlet end (3) has a channel density of 20 cpsi (channels per square inch) to 200 cpsi.

5. Device (1) according to one of the preceding patent claims, wherein the pipeline section (2) has, between the disk-shaped honeycomb body (6) at the outlet end (5) and the outlet end (5), a flow alignment section (47) in which the cross section (53) of the pipeline section (2) is at least partially offset.

6. Device (1) according to one of the preceding patent claims, wherein a diameter (9) of the pipeline section (2) widens in conical fashion in a widening section (10) between the at least one disk-shaped honeycomb body (6) at the inlet end (3) and the metering device (7).

7. Device (1) according to one of the preceding patent claims, wherein the pipeline section (2) has, between the metering device (7) and the outlet end (5), a bend (11) with an angle (12) of 10° and 45°.

8. Device (1) according to one of the preceding patent claims, wherein the metering device (7) defines a metering direction (15) and the metering direction (15) predefines an impingement angle (16) for the liquid additive of less than 90° with respect to the disk-shaped honeycomb body (6).

9. Device (1) according to one of the preceding patent claims, wherein the disk-shaped honeycomb body (6) toward which the central axis (34) is directed is arranged with an angle of inclination (36) with respect to a pipe axis (26) of the pipeline section (2).

10. Device (1) according to one of the preceding patent claims, wherein the at least one disk-shaped honeycomb body (6) has a honeycomb body length (20) of less than 30% of the diameter (9) of the pipeline section (2).

11. Motor vehicle (21) having an internal combustion engine (22) and having an exhaust-gas treatment device (23) for the purification of the exhaust gases of the internal combustion engine (22), wherein the exhaust-gas treatment device (23) has at least one device (1) according to one of the preceding patent claims.

## Revendications

1. Dispositif (1), présentant une partie de conduite (2) pour un écoulement de gaz d'échappement (4) avec une extrémité d'entrée (3), une extrémité de sortie (5), une partie rectiligne (30) et un renflement (17) avec une ouverture (31) pour le montage d'un dispositif d'addition (7) pour un additif liquide dans la partie rectiligne (30), dans lequel le renflement (17) a une hauteur (32) et une extension (33), et en outre au moins un corps alvéolaire en forme de disque (6) est disposé respectivement à l'extrémité d'entrée (3) et à l'extrémité de sortie (5), dans lequel un axe central (34) de l'ouverture (31) est aligné sur un des corps alvéolaires en forme de disque (6), **caractérisé en ce que** l'extension (33) du renflement (17) est au moins deux fois plus grande que la hauteur (32), et au moins un des deux corps alvéolaires en forme de disque (6) à l'extrémité d'entrée (3) ou à l'extrémité de sortie (5) est de forme conique.

2. Dispositif (1) selon une des revendications précédentes, dans lequel il est prévu entre le corps alvéolaire en forme de disque (6) à l'extrémité d'entrée (3) et le dispositif d'addition (7) dans la partie de conduite (2) une buse, avec laquelle l'écoulement de gaz d'échappement (4) est confiné au centre dans la partie de conduite (2).

3. Dispositif (1) selon l'une quelconque des revendications précédentes, dans lequel la longueur (8) de la partie de conduite (2) de l'extrémité d'entrée (3) à l'extrémité de sortie (5) correspond à plus du double et à moins du quintuple d'un diamètre (9) de la partie de conduite (2).

4. Dispositif (1) selon l'une quelconque des revendications précédentes, dans lequel ledit au moins un corps alvéolaire en forme de disque (6) à l'extrémité d'entrée (3) présente une densité de canaux de 20 cpsi (canaux par pouce carré) à 200 cpsi.

5. Dispositif (1) selon l'une quelconque des revendications précédentes, dans lequel la partie de conduite (2) comporte entre le corps alvéolaire en forme de disque (6) à l'extrémité de sortie (5) et l'extrémité de sortie (5) une partie d'alignement de l'écoulement (47), dans laquelle la section transversale (53) de la partie de conduite (2) est au moins partiellement déplacée.

6. Dispositif (1) selon l'une quelconque des revendications précédentes, dans lequel un diamètre (9) de la partie de conduite (2) s'évase en forme de cône entre ledit au moins un corps alvéolaire en forme de disque (6) à l'extrémité d'entrée (3) et le dispositif d'addition (7) dans une partie d'élargissement (10).

7. Dispositif (1) selon l'une quelconque des revendications précédentes, dans lequel la partie de conduite (2) entre le dispositif d'addition (7) et l'extrémité de sortie (5) présente un coude (11) avec un angle (12) de 10° à 45°.

8. Dispositif (1) selon l'une quelconque des revendications précédentes, dans lequel le dispositif d'addition (7) définit une direction d'addition (15) et la direction d'addition (15) prescrit un angle d'incidence (16) pour l'additif liquide de moins de 90° sur le corps alvéolaire en forme de disque (6).

9. Dispositif (1) selon l'une quelconque des revendications précédentes, dans lequel le corps alvéolaire en forme de disque (6), sur lequel l'axe central (34) est aligné, est disposé avec un angle d'inclinaison (36) par rapport à un axe de tube (26) de la partie de conduite (2).

10. Dispositif (1) selon l'une quelconque des revendications précédentes, dans lequel ledit au moins un corps alvéolaire en forme de disque (6) présente une longueur de corps alvéolaire (20) de moins de 30 % du diamètre (9) de la partie de conduite (2).

11. Véhicule automobile (21), présentant un moteur à combustion interne (22) et un dispositif de traitement des gaz d'échappement (23) pour l'épuration des gaz d'échappement du moteur à combustion interne (22), dans lequel le dispositif de traitement des gaz d'échappement (23) présente au moins un dispositif (1) selon l'une quelconque des revendications précédentes.
